# EUROPEAN PATENT APPLICATION

(11) **EP 4 653 404 A1**
(43) Date of publication of application: **26.11.2025**
(21) Application number: 24305793.2
(22) Date of filing: 22.05.2024
(51) Int. Cl.: C04B 28/02, C04B 28/16, C04B 28/06, C04B 111/10

(54) **MORTARS CONTAINING CALCIUM ALUMINUM CEMENTS WITH IMPROVED EARLY AND LONG-TERM STRENGTH**

(71) Applicant: Holcim Technology Ltd, 6300 Zug (CH)
(72) Inventor: WATT, Olivier, 38070 SAINT QUENTIN FALLAVIER (FR); MARTIN, Laurence, 38070 SAINT QUENTIN FALLAVIER (FR); MEUNIER, Laurent, 38070 SAINT QUENTIN FALLAVIER (FR)
(74) Representative: Regimbeau

(57) **Abstract**

The invention relates to a premixed binder for mortar comprising, relative to the total weight of the premixed binder:
• from 10 wt.-% to less than 95 wt.-% of a cement C comprising Portland clinker and optionally mineral components, the cement C preferably comprising Portland clinker in an amount of at least 20% by weight, relative to the total weight of the cement C,
• from 0.25 to 7.5 wt.-% of amorphous calcium aluminate cement, CAC, relative to the total weight of the premixed binder, the amorphous CAC having an amorphous phase content of at least 50% by weight relative to the total weight of CAC,
• from 0.25 to 7.5 wt.-% of anhydrite,
• from 0.25 to 7.5 wt.-% calcium sulfoaluminate cement, CSA,
the premixed binder being essentially free of lithium salts.

The invention further relates to the use of the premixed binder to prepare a mortar, to the corresponding mortar upon addition of at least sand, and use thereof as repair mortar or as adhesive between construction building blocks.

## Description

### FIELD OF THE INVENTION

The invention relates to mortars, and the processes for preparing said mortars. These mortars are useful in particular as a construction material.

### BACKGROUND OF THE INVENTION

Mortars are ubiquitous cementitious materials generally used to bind building blocks such as stones, bricks, concrete masonry units, tiles, etc..., or as repair mortars to fill and seal irregular gaps between them, spread their weight more evenly, and sometimes to add decorative colors or patterns to masonry walls. In such applications, fast-setting times are required.

Fast-setting mortars are generally obtained by adding aluminate cement (such as CAC) to a composition comprising Portland cement and a source of calcium sulphate. Such fast-setting mortars have been known to develop unsatisfactory early compressive strength.

The prior art has therefore described improved mortar compositions.

For instance, US2019/0119163 describes construction chemical compositions comprising an inorganic binder (such as mortars), having as hydration control agent a mixture comprises at least one compound comprising an α-hydroxy-carboxylic unit, α-hydroxy-sulfonic acid unit or α-carbonyl-carboxylic unit and at least one water-soluble organic carbonate.

WO2013/040788 relates to low temperature mortars for Exterior Insulation Finish System (EIFS), which are generally used in thin layers, raising specific issues such as cracks formation upon curing, and developing a sufficient bonding strength sufficient especially at low temperatures. The mortars of WO2013/040788 comprise comprises 2 to 10% by weight of aluminate cement, 20 to 40% by weight of Portland cement, 0.5 to 4.5% by weight of calcium sulphate, 1 to 8% by weight of redispersible polymer powder or polymer emulsion, 0.02 to 1% by weight of a retarder, 0.5 to 5% by weight of an expansive agent, and 40 to 70% by weight of fillers, with percents relative to total dry weight of the mortar composition.

Mention may be made of WO2022/122848, which relates to hydraulic binders with a low CO₂ footprint, having a low milled cement clinker content, and exhibiting a higher early strength than existing LC3 type binders.

However, there is still a need for mortars containing amorphous calcium aluminate cements (CAC) with satisfactory early and long-term performances (i.e. compressive strength at 1 day and at 28 days), and which preferably allow to avoid the use of toxic constituents such as lithium salts.

### SUMMARY OF THE INVENTION

Surprisingly, the Inventors have discovered that a binder comprising a combination of calcium sulphoaluminate cement (CSA), anhydrite (anhydrous calcium sulphate), amorphous CAC and cement significantly improves the early strength of mortars.

In addition, when using such combination of cement with amorphous CAC, CSA and anhydrite, lithium salts are not necessary anymore to obtain fast setting times. Furthermore, the combination of amorphous CAC, CSA and anhydrite allows for significant reduction of portland clinker within the binder/mortar composition, while maintaining compressive strength and shortening setting times.

The mortars of the invention are non-self-levelling mortars.

In a first aspect, the invention concerns a premixed binder for mortar (also called premixed binder) comprising, relative to the total weight of the premixed binder:
- from 10 wt.-% to less than 95 wt.-% of a cement C comprising Portland clinker and optionally mineral components, the cement C preferably comprising Portland clinker in an amount of at least 20% by weight, relative to the total weight of the cement C,
- from 0.25 to 7.5 wt.-% of amorphous calcium aluminate cement, CAC, relative to the total weight of the premixed binder, the amorphous CAC having an amorphous phase content of at least 50% by weight relative to the total weight of CAC,
- from 0.25 to 7.5 wt.-% of anhydrite,
- from 0.25 to 7.5 wt.-% calcium sulfoaluminate cement, CSA
the premixed binder being essentially free of lithium salts.

In particular embodiments of the premixed binder:
Advantageously, the premixed binder for mortar is characterized in that:
- the cement comprises mineral components selected from the group consisting of calcium carbonate, silica, ground glass, solid or hollow glass beads, glass granules, expanded glass powders, silica aerogels, silica fume, slags, ground sedimentary siliceous sands, fly ash, pozzolanic materials, ground construction demolition waste or mixtures thereof, and/or
- the cement comprises up to 40 wt.-% Portland clinker by weight, relative to the total weight of the cement C, and/or
- the amorphous calcium aluminate cement / calcium sulfoaluminate cement weight ratio ranges from 1:2 to 3:1, preferably 1:1 to 2:1, and/or
- the anhydrite/amorphous CAC weight ratio ranges from 1:4 to 4:1, preferably from 2.5:1 to 1:2.5. typically, it is of 1:2, and/or
- the premixed binder comprises up to 20 wt.-% of additives relative to the total weight of the premixed binder, typically selected from the group consisting of a resin, a water reducer, an accelerator, a retarder, a superabsorbent polymer, a pigment, a defoamer, and mixtures thereof, and/or
- the premixed binder comprises 1 wt.-% or less of a viscosity modifying agents, relative to the total weight of the premixed binder.

In another aspect, the invention concerns the use of the premixed binder of the invention to prepare a mortar.

In another aspect, the invention concerns a mortar comprising the premixed binder of the invention, further comprising sand, and typically water. Advantageously, the sand content ranges from 30 wt.-% to 85 wt.-% of sand, preferably from 35 wt.-% to 80 wt.-%, even more preferably from 37% to 60%, relative to the total weight of the premixed binder.

In another aspect, the invention relates to the use of the mortar of the invention as repair mortar or as adhesive between construction building blocks such as bricks, tiles, concrete blocks or stones.

The fast-setting mortar of the invention enables to even further reduce the environmental impact of the binder by reducing the amount of Portland clinker to be used in the composition while maintaining the compressive strength of the binder formulation.

### DEFINITIONS

**Premixed Binder:** A premixed binder refers to a dry composition comprising at least cement, said composition being suitable to be mixed with water and sand for preparing a mortar.

**Mortar:** a mortar refers to a composition comprising a premixed binder, water and sand, which in the presence of water forms a paste which sets and hardens by means of hydration reactions and processes and which, after hardening, retains its strength and stability even under water. The terms "mortar" and "mortar composition" will have the same meaning in the present disclosure. The mortars of the invention are non-self-levelling mortars.

**Non-self-levelling mortar:** Mortar is a cementitious product in the form of a paste which hardens to bind building blocks such as stones, bricks, tiles, concrete masonry units etc..., to fill and seal the irregular gaps between them, spread the weight of them evenly, and sometimes to add decorative colors or patterns to masonry walls.

Non-self-levelling mortar is distinguished over self-levelling mortars, which self-level under the effect of gravity only. Self-levelling mortars are highly liquid compositions to be poured onto a surface, so as to smooth or flatten surfaces, in particular before installing floor coverings. Typically, after setting has occurred, that the final surface of a self-levelling mortar is (almost) perfectly horizontal.

**Total weight of a composition:** As used herein, the "total weight of a composition" is understood as the total weight of the composition in the dry state, *i.e.* the total weight of the dry matter of the composition, unless otherwise stated.

**Cement:** The cement comprises or preferably consists of Portland clinker and a source of calcium sulphate. The cement is preferably as defined in the standard NF-EN-197-1 of April 2012, or in the standard NF EN 197-5 published in May 2021. The cements defined in these standards are grouped in 6 different families: CEM I, CEM II, CEM III, CEM IV, CEM V and CEM VI. The cement can also be a CEM I, CEM II, CEM III, CEM IV, CEM V or a CEM VI to which mineral components are further added in a second preparation step. The cement may be any mineral binder that comprises Portland clinker optionally mixed with one or several mineral components as defined below.

Preferably, the calcium sulphate content ranges from 0% to 5% by weight of the cement. The cement is essentially free of a calcium aluminate cement and calcium sulfoaluminate cement.

**Calcium sulphate:** Calcium sulphate used according to the present invention includes gypsum (calcium sulphate dihydrate, CaSO₄.2H₂O), hemi-hydrate (CaSO₄.1/2H₂O), anhydrite (anhydrous calcium sulphate, CaSOt) or a mixture thereof. Calcium sulphate produced as a by-product of certain industrial processes may also be used.

**Mineral component (or mineral addition):** the mineral component may designate slag (for example, as defined in the European NF EN 197-1 Standard of April 2012, paragraph 5.2.2), pozzolanic materials (for example as defined in the European NF EN 197-1 Standard of April 2012, paragraph 5.2.3), fly ash (for example, as described in the European NF EN 197-1 Standard of April 2012, paragraph 5.2.4), calcined schists (for example, as described in the European NF EN 197-1 Standard of April 2012, paragraph 5.2.5), material containing calcium carbonate, for example limestone (for example, as defined in the European NF EN 197-1 Standard paragraph 5.2.6), limestone components (for example, as defined in the "Concrete" NF P 18-508 Standard), silica fume (for example, as defined in the European NF EN 197-1 Standard of April 2012, paragraph 5.2.7), siliceous components (for example, as defined in the "Concrete" NF P 18-509 Standard), metakaolin or mixtures thereof. The mineral component may also be ground construction demolition waste.

Examples of siliceous components are ground glass, solid or hollow glass beads, glass granules, expanded glass powder.

**Amorphous calcium aluminate cement (amorphous CAC):** amorphous calcium aluminate cement comprises amorphous hydraulic phases having a C/A molar ratio ranging from 0.3 to 15, preferably from 0.5 to 12. The amorphous phase content is of at least 50% by weight and therefore the crystallization phase content is lower than or equal to 50% by weight, relative to the total weight of CAC. The amorphous phase content is preferably at least 55 wt.-%, 60 wt.-%, 65 wt.-%, at least 70 wt.-%, at least 75 wt.-%, at least 80 wt.%, at least 85 wt.-%, at least 90 wt.-%, relative to the total weight of CAC.

In cement chemist notation, primary compounds are represented by C for CaO, S for SiO₂, A for Al₂O₃, $ for SO₃, F for Fe₂O₃, which will be used throughout the present text, unless otherwise indicated.

Calcium aluminate cements may further comprises at least one crystalline phase selected from CA, C12A7, C3A, C11A7CaF2, C2A(1-x)Fx (with x a member of ]0,1]), or mixtures thereof. Calcium aluminate cements preferably comprise at least C12A7 phase. Amorphous CAC is further characterized by an alumina (Al₂O₃) content ranging from 3 to 70% by total weight of the CAC, preferentially ranging from 7 to 50% by weight and better ranging from 20 to 30% by weight.

Amorhpous CAC may comprise low amounts of calcium sulfate, such as 5 wt.-% or less, preferably 5 wt.-% or less or calcium sulfate, relative to the total weight of CAC.

The CAC is essentially free of a cement as defined before, and of CSA as defined below.

**Calcium sulfoaluminate cement (CSA):** Calcium sulfoaluminate cements are calcium aluminate cements that further comprise sulphates, generally in the form of C4A3$ (ye'elimite in the cement chemist notation), which forms at least 50 % of the weight of CSA cement. The CSA is essentially free of cement and of CAC as defined before.

**Essentially free of:** As used herein, a material is "essentially free of" a particular component when the component is present in a very low content, usually 5% by weight or less, compared to the total weight of the material, more especially below 1% by weight. For instance, a cement is essentially free of calcium aluminate cement when calcium aluminate cement is present in the cement in an amount of less than 5 wt.-% or preferably 1 wt.-% of the total weight of cement. For instance, a cement is essentially free of calcium sulfoaluminate cement when calcium sulfoaluminate cement is present in the cement in an amount of less than 5 wt.-%, preferably 1 wt.-%, even more preferably 0.5 wt.-% of the total weight of cement.

Also, a mortar or a premixed binder is essentially free of lithium salts when lithium salts are present in an amount of less than 5 wt.-%, preferably less than 1 wt.-% even more preferably less than 0.5 wt.-% of the total weight of the mortar.

### DETAILED DESCRIPTION OF EMBODIMENTS OF THE INVENTION

### 1. Premixed binder

The invention concerns a premixed binder comprising, relative to the total weight of the premixed binder:
- from 10 wt.-% to less than 95 wt.-% of a cement C comprising Portland clinker and optionally mineral components, the cement C preferably comprising Portland clinker in an amount of at least 20% by weight relative to the total weight of the cement C,
- from 0.25 to 7.5 wt.-% of amorphous calcium aluminate cement, CAC, relative to the total weight of the premixed binder, the amorphous CAC having an amorphous phase content of at least 50% by weight relative to the total weight of CAC,
- from 0.25 to 7.5 wt.-% of anhydrite,
- from 0.25 to 7.5 wt.-% calcium sulfoaluminate cement, CSA,
the premixed binder being essentially free of lithium salts.

The premixed binder of invention thus comprises three cements of different nature:
1) the cement C, as defined above and below, and essentially free of CAC and CSA,
2) amorphous calcium aluminate cement, also referred to as "amorphous CAC"
3) calcium sulfoaluminate cement, also referred to as "CSA".

It further comprises anhydrite.

This quaternary mixture provides advantageous characteristics including fast setting time and early strength, as well as long-term strength, to the final mortar.

### Cement C

The cement C has the definition provided above for "cement". The cement C is essentially free of a calcium aluminate cement and calcium sulfoaluminate cement. The cement C preferably comprises Portland clinker in an amount of at least 20%, or of at least 25% by weight, relative to the total weight of the cement C. The cement C preferably comprises up to 40 wt.%, even more preferably up to 35 wt.% such as up to 30 wt.%, of Portland clinker by weight relative to the total weight of the cement C.

The cement C as used in the invention may be any type of cement comprising Portland clinker, whatever its chemical composition is, and whatever its alkaline content.

Therefore, one of the advantages of the invention is not having to select a specific type of cement comprising Portland clinker. Advantageously, the cement C used in the invention is selected from the cements readily available on the market.

Advantageously, the cement C is a CEM I or CEM II, optionally further mixed with mineral components, and preferably comprising at least 20 wt.-%, preferentially up to 40 wt.-%, even more preferentially up to 30 wt.-%, of Portland clinker, relative to the total weight of cement C.

As mentioned above, the cement C may comprise mineral components (or mineral additions) as defined above. Suitable mineral components are preferably selected from calcium carbonates such as limestone, silica, ground glass, solid or hollow glass beads, glass granules, expanded glass powders, silica aerogels, silica fume, slags such as granulated blast furnace slag, ground sedimentary siliceous sands, fly ash, pozzolanic materials, construction waste or mixtures thereof.

The mineral components are preferably in the form of particles having a Dv90 of 200 µm or less, and more preferably a Dv97 of 200 µm or less. Particle size can be measured by laser granulometry using for example a Malvern MS2000.

Mineral components of different natures (calcareous, siliceous, fly ash, silica fume) may be used in the cement C. The mineral components include calcareous, siliceous, and silico-calcareous materials. They include natural, artificial, waste and recycled materials. The mineral components may also comprise, for example, wood.

Typically, the mineral components content of the premixed binder ranges from 0 to 80 wt-%, preferentially from 50 or 65 to 75 wt-%, relative to the total weight of the premixed binder.

In a particular embodiment, the premixed binder comprises 70 wt.-% or more, preferably 80 wt.-% or more, even more preferably 90 wt.-% or more, of cement C (optionally comprising mineral components) relative to the total weight of the premixed binder.

The premixed binder preferably comprises up to 95 wt.-% of cement C (optionally comprising mineral components) relative to the total weight of the premixed binder.

### Amorphous CAC

The premixed binder preferably comprises from 0.3 to 7.0 wt.-%, preferably from 0.5 to 5.0 wt.-%, even more preferably from 0.8 to 2.0 wt.-% of amorphous CAC relative to the total weight of premixed binder.

Amorphous CAC usually accelerates setting times of the mortars.

Amorphous CAC preferably comprise at least 50 wt.-%, more prefeably at least 65 wt.% or more, even more preferably 80 wt.-% or more, of C12A7 phase relative to the total weight of amorphous CAC. In some embodiments, the amorphous CAC comprises 100 wt.-% of C12A7 phase, relative to the total weight of amorphous CAC.

### Anhydrite

The premixed binder comprises advantageously from 0.3 to 5 wt.-% of anhydrite, preferably from 0.5 to 3.0 wt.-%, even more preferably from 0.8 to 2.0 wt.-%, relative to the total weight of the premixed binder.

Preferably, the anhydrite/amorphous CAC weight ratio ranges from 1:4 to 4:1, preferably from 2.5:1 to 1:2.5. typically, it is of 1:2.

Anhydrite is or consists essentially of anhydrous calcium sulphate (CaSOt). It may be obtained by calcination of gypsum, under temperatures sufficiently high for the gypsum to be completely dehydrated. There are different types of anhydrites: anhydrite I, anhydrite II and anhydrite III. The type of compound formed depends on the implemented calcination method and the gypsum calcination temperature.

Anhydrite may be natural (rock which must be ground before use) or synthetic (e.g. by-product during the manufacture of hydrofluoric acid).

### CSA

The premixed binder advantageously comprises from 0.3 to 5 wt.-%, preferably from 0.5 to 4.0 wt.-%, even more preferably from 1.0 to 3.5 wt.-% of CSA relative to the total weight of premixed binder.

Advantageously, the premixed binder of the invention has an amorphous CAC/CSA weight ratio ranging from 1:2 to 3:1, preferably 1:1 to 2:1.

### Calcium sulphate

The composition may further comprise (in addition to the anhydrite) calcium sulphate.

Calcium sulphate used includes gypsum (calcium sulphate dihydrate, CaSO4.2H2O), hemi-hydrate (CaSO4.1/2H2O), anhydrite (anhydrous calcium sulphate, CaSO4) or a mixture thereof. The gypsum and anhydrite exist in the natural state. Calcium sulphate produced as a by-product of certain industrial processes may also be used.

The premixed binder may comprise from 0.5 to 7.5% by weight, preferably 0.5 to 5 % by weight, compared to the total weight of the premixed binder, of calcium sulphate. This is the content of calcium sulphate added in addition to the calcium sulphate already present in the cement C.

### Additives

Optionally, the premixed binder further comprises up to 20%, preferably up to 15 % of further additives by weight relative to the weight of premixed binder.

Typically, the additives are selected from the group consisting of a resin, a water reducer, an accelerator, a retarder, a superabsorbent polymer, a viscosity modifying agent, a pigment, a defoamer, anti-shrinkage agent, and mixtures thereof.

The premixed binder may thus comprise a resin, preferably up to 10 wt.-% of resin, such as between 1.5 wt.-% and 5 wt.-%, relative to the total weight of the premixed binder.

Advantageously, the premixed binder may further comprise an accelerator (or accelerating agent). The accelerator is typically as defined in the standard NF EN 934-2 of September 2012. Suitable accelerators may for example be selected from:
- alkaline metal or alkaline earth metal salts, especially potassium salts, calcium salts and sodium salts wherein the anion may be nitrate, nitrite, chloride, formate, thiocyanate, bromide, or mixtures thereof;
- alkali metal or alkaline earth metal silicates and aluminates, for example sodium silicate, potassium silicate, sodium aluminate, potassium aluminate, or mixtures thereof;
- lime.

In particular the cement for the premixed binder may comprise a CAC accelerator.

In some embodiments, the accelerator is not a lithium salt, or is essentially free of lithium salts.

Advantageously, it is present in an amount up to 2% by weight relative to the total weight of premixed binder. In other words, the premixed binder may further comprise an accelerator in an amount ranging from 0.2 to 2.0 wt-%, relative to the total weight of the premixed binder.

Advantageously, the premixed binder does not comprise an accelerator.

The premixed binder may also comprise a retarder. Retarders are typically as defined in the standard NF EN 934-2 of September 2012. Suitable retarders may for example be selected from sucrose, alpha hydroxyacids or salts thereof, ethanolamines or salts thereof, and/or catechols and derivatives thereof. Particularly preferred are alpha hydroxyacids and salts thereof, in particular alkali metal salts thereof. The salt may be selected from the group consisting of tartrate, citrate, lactate, malate, benzoate, acetate, and combinations thereof. Typically, the retarder is tartaric acid, calcium or sodium tartrate, citric acid, or calcium and sodium citrate.

Advantageously, the premixed binder comprises a retarder in an amount ranging from 0.1 to 1.0 wt-%, relative to the total weight of the premixed binder.

The premixed binder may also comprise an anti-shrinkage agent, such as sodieum carbonate. Advantageously, the premixed binder comprises an anti-shrinkage agent in an amount ranging from 0.1 to 1.0 wt-%, relative to the total weight of the premixed binder.

Advantageously, the additives are selected from the group consisting of:
- a resin, to improve abrasion resistance or surface adhesion of the mortar to a cover layer such as tiles,
- a pigment, to provide a decorative effect,
- an accelerator and/or a retarder, to further modify the setting time of the composition,
- an anti-shrinkage agent; and
- mixtures thereof.

Preferred additives are an anti-shrinkage agent such as sodium carbonate, and retarders such as tartaric acid.

Preferably, the premixed binder is essentially free of lithium salts. Even more preferably, the premixed binder comprises less than 0,05 wt.-% of lithium salts, relative to the total weight of the premixed binder.

Advantageously, the premixed binder is essentially free of polymeric additives.

In some embodiments, the premixed binder is essentially free of limestone, and/or of calcined clay.

### Particular embodiments

Advantageously, the premixed binder comprises or consist of, relative to the total weight of the premixed binder:
- at least 10 wt.-%, typically at least 95 wt.-%, of a cement C, wherein cement C comprises Portland clinker and optionally mineral components, the Portland clinker being typically in an amount ranging from 20% by weight to 40% by weight, preferentially from 20% by weight to 30% by weight, relative to the total weight of the cement C,
- from 0.3 to 3.0 wt.-% of amorphous calcium aluminate cement, CAC,
- from 0.3 to 3.0 wt.-% of anhydrite,
- from 0.8 to 3.5 wt.-% calcium sulfoaluminate cement, CSA,
- optionally up to 20 wt.-% additives, preferably selected from the group consisting of a pigment, an accelerator, a retarder, and combinations thereof,
wherein the premixed binder preferably has an amorphous CAC/CSA weight ratio ranging advantageously from 1:2 to 3:1, preferably 1:1 to 2:1. Of course, the total of all components within the premixed binder totals 100 wt.-%.

The premixed binder is essentially free of lithium salts.

### 2. Cement slurry or paste for mortar, and mortar

The invention further concerns the use of the premixed binder to prepare a mortar.

The invention also relates to a mortar comprising the premixed binder and further comprising sand.

### Sand

The sands that are used in the mortar are conventional aggregates in conformity with the standard EN 12620 (sands for concrete). In practice, the Dmax is less than 4 mm, preferentially less than 1 mm, and even more preferentially less than 500 µm. The sands include calcareous, siliceous and silico-calcareous materials. The sand may be of different origins, washed alluvial (rolled, semi-crushed or crushed), sands of marine origin, crushed limestone sands (dry or washed), sands of magmatic origin (porphyry, granite), recycling aggregates from the crushing of concretes or other construction materials.

When the sand includes clay, it is advantageous to add inerting agents. Clay inerting agents are compounds that help reduce or prevent the harmful effects of clays on the properties of hydraulic binders. Clay inerting agents include those described in FR 2 948 118, WO 2006/032785 and WO 2006/032786.

Advantageously, the sand content of the mortar ranges from 30 to 85 wt.-%, preferably from 35 to 80 wt.-%, preferentially from 37 to 60 wt.-%, relative to the total weight of the mortar.

### Mortars

Advantageously, the mortar is obtained by mixing, % are expressed in weight compared to the total weight of components:
- from 20 to 50 wt.-% of sand,
- from 10 to 35 wt.-% of water,
- from 10 to 60 wt.-% of a cement C, wherein cement C is as defined above,
- from 0.25 to 7.5 wt.-%, preferably from 0.5 to 3.0 wt.-%of amorphous calcium aluminate cement, CAC,
- from 0.25 to 7.5 wt.-%, preferably from 0.5 to 2.0 wt.-%of anhydrite,
- from 0.25 to 7.5 wt.-%, preferably from 1.0 to 3.0 wt.-% calcium sulfoaluminate cement, CSA,
- optionally up to 5 wt.-% of additives selected from the group consisting of a resin, a water reducer, an accelerator, a retarder, a superabsorbent polymer, a viscosity modifying agent, a pigment, a defoamer, an anti-shrinkage agent, and mixtures thereof, preferably a pigment, an accelerator, a retarder, an anti-shrinkage agent and combinations thereof,
provided that the mortar composition is essentially free of lithium salts.

Water is usually added to the mortar composition. The water content usually ranges from 10% to 25%, such as from 12% to 20% (% are expressed in weight compared to the the total weight of components).

### 3. Process for preparing the mortar

Any conventional process for preparing a mortar is suitable to prepare the mortar of the invention.

The cements as disclosed above (cement C, CAC, CSA), anhydrite and optionally calcium sulphate may be mixed, in the contents disclosed above, to form a premix. All or part of the optional additives may also be added to the premix.

The premix can then be mixed with sand. All or part of the additives may be added to the composition comprising the premix and sand.

To prepare the mortar, water may be added, in the content disclosed herein, before or during or after addition of sand. All or part of the admixtures can be added to the mixing water.

Typically, the initial setting time of the mortar ranges from 30 to 120 minutes, and its final setting time ranges from 40 minutes to 3 hours at room temperature. The setting times may be adjusted by adjusting the content of accelerators and/or retarders (such as tartaric acid for instance).

After setting, the mortar preferably comprises, in weight compared to the total weight of the mortar:
- from 50 wt.-% to 70 wt.-% of the premixed binder, preferably from 55 wt.-% to 65 wt.-%,
- from 30 wt.-% to 50 wt.-% of sand, preferably from 35 wt.-% to 45 wt.-%.

Of course, the total of all components within the mortar totals 100 wt.-%.

The mortar has a good early (1 day) and long-term (28 days) compressive strength. Typically, the mortar has a compressive strength at 24 hours ranging from 9,5 to 30,0 MPa, and preferably a compressive strength at 28 days typically ranging from 25 to 100 MPa.

### 4. Uses

The invention further concerns the use of the mortar of the invention as repair mortar or as adhesive between construction building blocks such as bricks or tiles.

More particularly, the invention concerns a method of binding construction building blocks such as bricks or tiles, said method comprising:
a) providing the mortar of the invention,
b) pouring the mortar of step a) on at least part of a building block and spreading it,
c) Positioning another building block on the mortar, and
d) Letting the mortar of step c) set.

The construction building blocks may be bricks or tiles or concrete blocks or stones.

### METHODS

### Measurement of amorphous phase content of a calcium aluminate cement

The amorphous phase content of a CAC is measured by X-ray diffraction analysis (XRD) which allows to quantify the crystalline phases content or crystallinity, which is generally expressed as a % of the area under the crystalline peaks relative to the are under the entire XRD curve. The amorphous phase content is then calculated as follows, and is also expressed as a percentage: Amorphous phase content = 100 - Crystallinity.

### Measurement of setting time

Specifically, the setting time may be measured according to the following protocol:
- Immediately after the mixing procedure, fill a plastic cup with 300 g of mortar paste.
- Place the cup in a polystyrene box and introduce a thermocouple by the orifice at the top in order it is introduced in the mortar paste.
- Start the temperature recorder and note the delay between the moment the material is in contact with the water and the starting of recording.
- Acquire temperature data at least until the maximum is reached.

The setting time is considered as the time at which the maximum temperature is reached.

### Method for measuring the compressive strength (Cs):

A cement slurry of the invention is typically cast in a mold. The cement slurry is cured for 28 days at 20°C and 100% relative humidity to give a cured absorbent mineral composition. Prismatic samples (dimensions 40 mm × 40 mm in cross section and 160 mm in length) are used for measuring the compressive strength.

A mini-press is used for measuring low resistances.

### Method for measuring the flexural strength (Fs):

The flexural Strength may be measured according to the following protocol, in accordance with standard EN-196-1 as of May 2016. :
- Mould the specimens immediately after the preparation of the mortar. Place the mould on the flow table, introduce, using a suitable scoop, in one or more increments, the first of two layers of mortar (each about 300 g) into each of the mould compartments, directly from the mixing bowl.
- Apply 60 shocks at the rate of one shock per second.
- Introduce the second layer and fill completely the mould.
- Apply 60 shocks at the rate of one shock per second.
- Level off the material with a spatula.
- Store the samples in the 20°C / 95% HR cabinet during 24h.
- After 24 hours, demould the specimens and test the flexural and compressive strength on one of the specimens according to the EN-196-1 as of May 2016..
- Keep the two other specimens at 20°C / 50%HR during 27 days more.
- After 28 days, test flexural and compressive strength on these two samples.

### EXAMPLES

The following non-restrictive example illustrate embodiments of the invention.

### Materials

The cement used is a mix of a CEM I 52.5R HER supplied by CBR and a filler (or mineral addition). The mineral addition is a calcium carbonate filler: Calcitec 2000 filler supplied by CARMEUSE.

Amorphous CAC is a PP331 supplied by Imerys (Leap Fit).

Anhydrite is supplied by CCSH.

The CSA is Calumex Quick supplied by Caltra.

The accelerator is Li₂CO₃ (calcium aluminate-based accelerator) supplied by RodaChem as a powder with a granulometry of 40 µm or less.

The sand is M32 sand supplied by SIBELCO.

Other additives include:
∘ Na₂CO₃ is supplied as a powder by TATA or SOLVAY, which decreases shrinkage and delays the setting time.
∘ L-Tartaric acid (a retarder) is supplied by RFI (food ingredients).
∘ Water: tap water.

### Equipment:

Mixer of the type described in EN 196-1 using the slow speed settings (140 ± 5) rotations per min and (62 ± 5) revolution planetary movement.

Flow table as described in EN 1015-3 as of October 1999.

Polystyrene mould as described in EN-196-1 as of May 2016 consisting of three horizontal compartments so that three prismatic specimens 40 mm × 40 mm in cross section and 160 mm in length can be prepared simultaneously.

Multi-channel temperature recorder and thermocouples type K (Testo 176 T4)

Plastic cups 30cl at least
Polystyrene boxes, capable of containing one cup and provided with an orifice at the top allowing the passage of the thermocouple.

### Example 1

Mortars A to G were prepared using the compositions set forth in table 1 below.

**Table 1.**

| **Mortar** | **A** (%)* | **B** (%)* | **C** (%)* | **D** (%)* | **E** (%)* | **F** (%)* | **G** (%)* |
|---|---|---|---|---|---|---|---|
| CEMI 52,5R (Belgique) | 18 | 18 | 18 | 18 | 18 | 18 | 18 |
| PP331 (amorphous CAC) | 0 | 1,2 | 1,2 | 0 | 0 | 1,2 | 1,2 |
| CaSO₄ anhydrite | 0 | 0 | 0 | 1 | 1 | 1 | 1 |
| Calumex Quick (CSA) | 0 | 0 | 0 | 2 | 2 | 2 | 2 |
| Calcitec (filler) | 43 | 42 | 42 | 41 | 41 | 40 | 40 |
| M32 Silica sand | 39 | 38,56 | 38,51 | 37,77 | 37,72 | 37,52 | 37,47 |
| **HTA Tartaric Acid** | 0 | 0,12 | 0,12 | 0,11 | 0,11 | 0,16 | 0,16 |
| Na₂CO₃ | 0 | 0,12 | 0,12 | 0,12 | 0,12 | 0,12 | 0,12 |
| Li₂CO₃ | 0 | 0 | 0,05 | 0 | 0,05 | 0 | 0,05 |
| | | | | | | | |
| Water (%)** | 18 | 18 | 18 | 18 | 18 | 18 | 18 |

| | | | | | | | |
|---|---|---|---|---|---|---|---|
| * Weight percentages relative to the weight of the total premix (dry). ** Weight percentages relative to the weight of the total mortar composition (dry mortar + water). | | | | | | | |

Mortars A to G are prepared by mixing all dry ingredients in a static mixer, and then progressively adding water.

The fresh mortar for these tests shall have a minimum of 1700 g.

The length of mixing period is measured from the moment all the constituents are in contact with the water.

### Mixing procedure:

- pour the liquid into the pan;
- scatter the dry powder over the liquid;
- mix for 30 s;
- take out the mixing paddle;
- scrape down the paddle and pan within 1 min;
- replace the paddle and mix for 1 min.

Reference mortars A, B and C, as well as comparative mortars D and E, are not according to the present invention as they do not contain CSA + CAC + anhydrite. Mortar F is a mortar according to the invention. Mortar G is a comparative example.

### Results

The results are presented in table 2 below.

**Table 2. Cs stands for compressive Strength. Fs stands for flexural strength**

| **Mortar** | **A** | **B** | **C** | **D** | **E** | **F** | **G** |
|---|---|---|---|---|---|---|---|
| setting time (in h and min) | 07:34 | 01:31 | 01:41 | 02:28 | 01:52 | 01:43 | 01:54 |
| Fs 24h | 2,4 | 1,3 | 1,9 | 2,9 | 2,9 | 2,7 | 2,8 |
| **Cs 24h (in MPa)** | **9,1** | **4,2** | **5,8** | **6,2** | **7,7** | **10,3** | **10,8** |
| Fs 28 d | 5,6 | 4,7 | 5,1 | 4,9 | 5,2 | 7,6 | 8,5 |
| Cs **28d (in MPa)** | **23,3** | **18,4** | **19,4** | **23,8** | **24,7** | **33,4** | **37,2** |

The results show that the setting time of mortars B to G is essentially similar.

In contrast, the compressive strength, both at 24h and at 28 days, is greatly increased when a combination of CAC, CSA and anhydrite is used together with CEM I. Reference examples B and C (lacking CSA and anhydrite), as well as comparative examples D and E (lacking CAC) show that there is a synergistic effect due to the quaternary combination cement + CAC + CSA + anhydrite with regards to compressive strength performances.

Also, the examples show that removing the lithium salts from the composition does not negatively impact the setting times of compressive strength of the mortar (see mortars F and G).

To conclude, the inventive mortar compositions enable to reduce the environmental impact of the mortars by reducing the amount of Portland clinker necessary to maintain good compressive strength performances.

### Example 2

Mortars H to J were prepared using the compositions set forth in table 3 below.

**Table 3. The quantities are expressed as wt.-% relative to the total weight of the components of the mortar compositions - without water.**

| | **Reference example In wt.-%** | **H** | **H in wt.% of premixed binder** | **I** | **I in wt.-% of premixed binder** | **J** | **J in wt.-% of premixed binder** |
|---|---|---|---|---|---|---|---|
| CEMI 52,5R (Belgique) | 18 | **18** | 28,81% | **15** | 24,02% | **13** | 20,82% |
| Calcitec (filler) | 43.0 | 40.0 | 64,02% | 43.0 | 68,84% | 45.0 | 72,07% |
| PP331 (CAC amorphous) | 0 | 1.2 | 1,92% | 1.2 | 1,92% | 1.2 | 1,92% |
| CaSO4 anhydrite | 0 | 1 | 1,60% | 1 | 1,60% | 1 | 1,60% |
| Calumex Quick (CSA) | 0 | 2 | 3,20% | 2 | 3,20% | 2 | 3,20% |
| HTA | 0 | 0.16 | 0,26% | 0.14 | 0,22% | 0.12 | 0,19% |
| Na2CO3 | 0 | 0.12 | 0,19% | 0.12 | 0,19% | 0.12 | 0,19% |
| TOTAL PREMIXED BINDER | | 62.48 | 100% | 62.46 | 100% | 62.44 | 100% |
| M32 Silica sand | 39.0 | 37.5 | | 37.5 | | 37.5 | |
| TOTAL MORTAR | 100 | 100 | | 100 | | 100 | |
| Setting time | 07:34 | 02:21 | | 02:04 | | 01:51 | |
| Fs 24 h (in MPa) | 2.4 | 2.9 | | 2.4 | | 2.3 | |
| Cs 24 h (in MPa) | 9.1 | 12.3 | | 10.4 | | 9.4 | |
| Fs 28 d (in MPa) | 5.6 | 6.7 | | 6.2 | | 5.8 | |
| Cs 28 d (in MPa) | 23.3 | 31.2 | | 27.3 | | 24.3 | |

The mortars of example 2 were prepared following the procedure described in example 1.

### Results

The results demonstrate that using premixed binder composition according to the invention allows to reduce the amount of Portland clinker in the mortar composition from 18 to 15% or 13%, with28 days flexural and compressive strength values similar if not better than the reference mortar composition.

## Claims

1. Premixed binder for mortar comprising, relative to the total weight of the premixed binder:
• from 10 wt.-% to less than 95 wt.-% of a cement C comprising Portland clinker and optionally mineral components, the cement C preferably comprising Portland clinker in an amount of at least 20% by weight, relative to the total weight of the cement C,
• from 0.25 to 7.5 wt.-% of amorphous calcium aluminate cement, CAC, relative to the total weight of the premixed binder, the amorphous CAC having an amorphous phase content of at least 50% by weight relative to the total weight of CAC,
• from 0.25 to 7.5 wt.-% of anhydrite,
• from 0.25 to 7.5 wt.-% calcium sulfoaluminate cement, CSA,
the premixed binder being essentially free of lithium salts.

2. The premixed binder of claim 1, wherein the cement comprises mineral components selected from the group consisting of calcium carbonate, silica, ground glass, solid or hollow glass beads, glass granules, expanded glass powders, silica aerogels, silica fume, slags, ground sedimentary siliceous sands, fly ash, pozzolanic materials, ground construction demolition waste or mixtures thereof.

3. The premixed binder of claim 1 or 2, wherein the cement comprises up to 40 wt.-% Portland clinker by weight, relative to the total weight of the cement C.

4. The premixed binder of any of claims 1 to 3, wherein the amorphous calcium aluminate cement / calcium sulfoaluminate cement weight ratio ranges from 1:2 to 3:1, preferably 1:1 to 2:1.

5. The premixed binder of any of claims 1 to 4, wherein the anhydrite/amorphous CAC weight ratio ranges from 1:4 to 4:1, preferably from 2.5:1 to 1:2.5. typically, it is of 1:2.

6. The premixed binder of any of claims 1 to 5, wherein the premixed binder comprises up to 20 wt.-% of additives relative to the total weight of the premixed binder, typically selected from the group consisting of a resin, a water reducer, an accelerator, a retarder, a superabsorbent polymer, a pigment, a defoamer, and mixtures thereof.

7. The premixed binder of any of claims 1 to 6, wherein the premixed binder comprises 1 wt.-% or less of a viscosity modifying agents, relative to the total weight of the premixed binder.

8. Use of the premixed binder of any of claims 1 to 7 to prepare a mortar.

9. A mortar comprising the premixed binder of any of claims 1 to 7, further comprising sand.

10. The mortar of claim 9, wherein the sand content ranges from 30 wt.-% to 85 wt.-% of sand, preferably from 35 wt.-% to 80 wt.-%, even more preferably from 37% to 60%, relative to the total weight of the premixed binder.

11. Use of the mortar of claims 9 or 10 as repair mortar or as adhesive between construction building blocks such as bricks, tiles, concrete blocks or stones.
